# EUROPÄISCHE PATENTANMELDUNG

(11) **EP 2 428 395 A1**
(43) Veröffentlichungstag der Anmeldung: **14.03.2012**
(21) Anmeldenummer: 11180539.6
(22) Anmeldetag: 08.09.2011
(51) Int. Cl.: B60N 2/44, B60R 13/06

(54) **Verwendung eines länglichen Formkörpers sowie Formkörper**

(30) Priorität: 09.09.2010 DE 102010044808; 07.10.2010 DE 102010047575
(71) Anmelder: Ratzky, Jasmin, 66539 Neunkirchen (DE)
(72) Erfinder: Ratzky, Reiner, 66539 Neunkirchen (DE)
(74) Vertreter: Vièl, Christof

(57) **Zusammenfassung**

Die vorliegenden Erfindung betrifft die Verwendung eines länglichen Formkörpers (3), der deformierbar ist, zum Schließen der Lücke zwischen dem auf der Fahrzeuginnenseite befindlichen seitlichen Sitzteil eines Fahrzeugsitzes (1) und der Mittelkonsole (2) des Fahrzeuges bzw. dem Kardantunnel des Fahrzeugs.

## Beschreibung

Die vorliegende Erfindung betrifft eine Verwendung eines länglichen Formkörpers nach dem Oberbegriff des Anspruchs 1 sowie einen Formkörper nach dem Oberbegriff des Anspruchs 2.

Längliche Formkörper sind bekannt, um besonders in Altbauten Schlitze abzudichten im Bereich von Fenstern oder Türen. Ein Schlitz an der Unterkante eines Fensters wird dabei beispielsweise abgedichtet, indem ein solcher Formkörper auf die Fensterbank gelegt wird. Ein Splat entlang der unteren Kante einer Tür wird dabei abgedichtet, indem ein entsprechender länglicher Formkörper bei geschlossener Tür auf den Boden hinter die Tür gelegt wird.

Der vorliegenden Erfindung liegt das Problem zu Grunde, dass in Fahrzeugen immer wieder Gegenstände wie beispielsweise Münzen, Schlüssel, Tankbelege oder ähnliches dem Fahrzeugführer oder dem Beifahrer aus der Hand fallen und dann zwischen den Fahrzeugsitz und die Mittelkonsole bzw. den Kardantunnel des Fahrzeugs geraten. Dieser Spalt ist vergleichsweise eng, so dass es entsprechend umständlich ist, diese Gegenstände wieder heraus zu bekommen.

Dieses Problem wird nach der vorliegenden Erfindung gemäß Anspruch 1 gelöst durch die Verwendung eines länglichen Formkörpers, der deformierbar ist, zum Schließen der Lücke zwischen dem auf der Fahrzeuginnenseite befindlichen seitlichen Sitzteil eines Fahrzeugsitzes und der Mittelkonsole des Fahrzeuges bzw. dem Kardantunnel des Fahrzeugs.

Dazu wird vorteilhaft ein Formkörper verwendet, der hinsichtlich seiner Länge so angepasst ist, dass die Länge dieses Formkörper zumindest in etwa der Länge des Fahrzeugsitzes entspricht.

Der Formkörper kann dabei elastisch deformierbar sein. Das bedeutet, dass der Formkörper beispielsweise als Ausgangsform eine zylindrische Form aufweist. Wird dieser Formkörper zwischen die Mittelkonsole und die seitliche Fläche des Sitzteils eines Fahrzeugsitzes gedrückt, verformt sich dieser Formkörper im wesentlichen zu einem länglichen Ellipsoid, wobei die Ellipse dieses Ellipsoids ungleiche Halbachsen aufweist. Wenn dieser Formkörper elastisch verformbar ist, bedeutet dies, dass dieser Formkörper wieder die zylindrische Form annimmt, wenn dieser aus dem Raum zwischen dem Fahrzeugsitz und der Mittelkonsole herausgenommen wird.

Es ist aber auch möglich, dass der Formkörper nicht elastisch deformierbar ist. Das bedeutet, dass der Formkörper seine Form grundsätzlich beibehält und beispielsweise vor dem Einbringen in den Zwischenraum zwischen dem Fahrzeugsitz und der Mittelkonsole zunächst manuell vorgeformt werden kann.

Die erfindungsgemäße Lösung nach Anspruch 2 betrifft einen Formkörper, wobei der Formkörper länglich und deformierbar ist. Erfindungsgemäß ist der Formkörper auf einer Seite hinsichtlich seiner seitlichen Kontur dem Verlauf der seitlichen Kontur des der Fahrzeuginnenseite zugewandten seitlichen Sitzteils des Fahrzeugsitzes nachgeformt.

Dabei erweist es sich als vorteilhaft, dass der Formkörper leichter in den Zwischenraum eingeführt werden kann. Durch die Verstellbarkeit des Fahrzeugsitzes in Längsrichtung des Fahrzeugs ergibt sich abhängig von der Sitzposition jeweils ein unterschiedlicher Abstand der Fahrzeugsitzes zur Mittelkonsole bzw. zum Kardantunnel. Dieser Abstand kann sich dabei noch entlang der Seitenlinie des Fahrzeugsitzes unterschiedlich stark ändern. Um aber die angesprochene Lücke zwischen Fahrzeugsitz und Mittelkonsole bzw. Kardantunnel zu schließen, bleibt die äußere Kontur der seitlichen Fläche des Sitzteils des Fahrzeugsitzes konstant. Indem also der Formkörper dieser Kontur bereits angepasst ist, muss dieser lediglich in einem geringeren Bereich verformt werden und kann damit leichter eingeführt werden.

Bei der Ausgestaltung nach Anspruch 3 weist der Formkörper eine Aussparung auf in dem Bereich, in dem sich das Gurtschloss des Sicherheitsgurtes befindet, der dem jeweiligen Fahrzeugsitz zugeordnet ist.

Damit wird das Gurtschloss in einfacher Weise frei gehalten, so dass auch bei eingefügtem Formkörper der Sicherheitsgurt einfach geschlossen und auch wieder geöffnet werden kann. Bei der Ausgestaltung nach Anspruch 4 ist der Formkörper einstückig aus einem Material geformt.

Dieses Material kann beispielsweise ein Schaumstoff einer geeigneten Elastizität sein. Dieser Schaumstoff kann dann aus optischen Gründen eingefärbt werden. Es ist aber auch möglich, den entsprechend geformten Formkörper noch mit einem Stoff, mit einem Kunstleder oder mit Leder zu beziehen. Dabei können auch bezogen auf einen bestimmten Fahrzeughersteller und ggf. bestimmte Ausstattungsvarianten die Bezüge verwendet werden, die als Serien- oder Sonderausstattungen als Sitzbezüge erhältlich sind.

Gemäß Anspruch 5 weist der Formkörper eine geschlossene äußere Hülle auf, die mit mehreren einzelnen Teilen gefüllt ist, wobei die einzelnen Teile ein Volumen in einem Bereich aufweisen, der einer Kugel mit einem Durchmesser im Bereich von 1 mm bis 5 cm entspricht.

Die Hülle kann dabei wieder aus Stoff, Kunstleder oder Leder bestehen, wie dies bereits im Zusammenhang mit Anspruch 4 beschrieben wurde. Diese Hülle wird vorteilhaft mit den Teilen gefüllt. Diese Teile können beispielsweise Kugeln aus einem Kunststoff sein (beispielsweise Polystyrol). Damit ergibt sich eine ausreichende Festigkeit der Füllung des Formkörpers, wobei der Formkörper aber durch die Verschiebbarkeit der Lage der Kugeln gegeneinander deformierbar bleibt.

Gemäß Anspruch 6 hat sich ein Volumen der Teile in einem Bereich als vorteilhaft erwiesen, der einer Kugel mit einem Durchmesser im Bereich von 2 mm bis 2 cm entspricht.

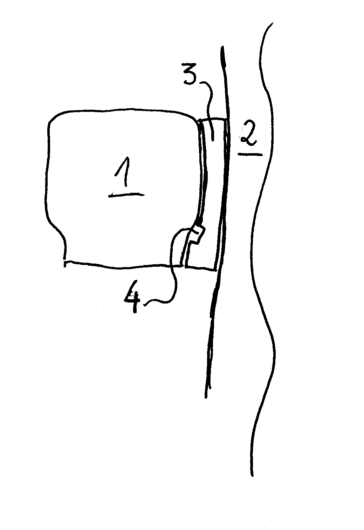

Ein Ausführungsbeispiel der Erfindung ist in der Zeichnung dargestellt. Die einzige Figur zeigt dabei einen Fahrzeugsitz 1 und eine Mittelkonsole 2 eines Fahrzeugs in Draufsicht von oben. Es ist zu sehen, dass die Lücke zwischen der seitlichen Fläche des Sitzteils des Fahrzeugsitzes 1 und der Mittelkonsole mit einem länglichen Formkörper 3 ausgefüllt ist.

In dem dargestellten Ausführungsbeispiel ist die dem Fahrzeugsitz zugewandte Seite des Formkörpers 3 der Außenkontur der Seitenfläche des Sitzteils des Fahrzeugsitzes nachgeformt. Dabei ist noch zu sehen, dass der Formkörper 3 eine Aussparung 4 aufweist für das Gurtschloss des Sicherheitsgurtes.

Der Formkörper 3 kann aus einem Schaumstoff bestehen, der mit einer Hülle überzogen sein kann. Ebenso ist es möglich, dass eine entsprechend gestaltete Hülle mit kleineren Teilchen ― wie beispielsweise mit Kugeln aus Polystyrol befüllt sein kann. Diese Kugeln können einen einheitlichen Durchmesser aufweisen oder auch unterschiedliche Größen haben. Es ist beispielsweise auch möglich, eine Hülle eines derartigen Formkörpers 3 mit Sand zu befüllen.

## Patentansprüche

1. Verwendung eines länglichen Formkörpers (3), der deformierbar ist, zum Schließen der Lücke zwischen dem auf der Fahrzeuginnenseite befindlichen seitlichen Sitzteil eines Fahrzeugsitzes (1) und der Mittelkonsole (2) des Fahrzeuges bzw. dem Kardantunnel des Fahrzeugs.

2. Formkörper, wobei der Formkörper (3) länglich und deformierbar ist,
**dadurch gekennzeichnet, dass** der Formkörper (3) auf einer Seite hinsichtlich seiner seitlichen Kontur dem Verlauf der seitlichen Kontur des der Fahrzeuginnenseite zugewandten seitlichen Sitzteils des Fahrzeugsitzes (1) nachgeformt ist.

3. Formkörper nach Anspruch 2,
**dadurch gekennzeichnet, dass** der Formkörper (3) eine Aussparung (4) aufweist in dem Bereich, in dem sich das Gurtschloss des Sicherheitsgurtes befindet, der dem jeweiligen Fahrzeugsitz (1) zugeordnet ist.

4. Formkörper nach einem der Ansprüche 1 bis 3,
**dadurch gekennzeichnet, dass** der Formkörper (3) einstückig aus einem Material geformt ist.

5. Formkörper nach einem der Ansprüche 1 bis 3,
**dadurch gekennzeichnet, dass** der Formkörper (3) eine geschlossene äußere Hülle aufweist, die mit mehreren einzelnen Teilen gefüllt ist, wobei die einzelnen Teile ein Volumen in einem Bereich aufweisen, der einer Kugel mit einem Durchmesser im Bereich von 1 mm bis 5 cm entspricht.

6. Formkörper nach Anspruch 5,
**dadurch gekennzeichnet, dass** die Teile ein Volumen in einem Bereich aufweisen, der einer Kugel mit einem Durchmesser im Bereich von 2 mm bis 2 cm entspricht.
